# EUROPEAN PATENT APPLICATION

(11) **EP 4 447 372 A1**
(43) Date of publication of application: **16.10.2024**
(21) Application number: 24169709.3
(22) Date of filing: 11.04.2024
(51) Int. Cl.: H04L 5/00, H04W 56/00, H04B 17/30

(54) **METHOD, APPARATUS AND COMPUTER PROGRAM FOR TRACKING DOWNLINK RECEPTION TIME TO USE FOR UPLINK TRANSMISSIONS**

(30) Priority: 14.04.2023 GB 202305501
(71) Applicant: Nokia Technologies Oy, 02610 Espoo (FI)
(72) Inventor: BARACCA, Paolo, 81669 Munich (DE); CAPORAL DEL BARRIO, Samantha, 9000 Aalborg (DK); HAKOLA, Sami-Jukka, 90450 Kempele (FI); TOFT, Morten, 9230 Svenstrup (DK); CAUDURO DIAS DE PAIVA, Rafael, 9200 Aalborg (DK)
(74) Representative: Script Intellectual Property LLP

(57) **Abstract**

An apparatus comprising: means for receiving, from a base station, an indication of at least one group of downlink reference signals for tracking, by the apparatus, downlink reception time to use for uplink transmissions at the apparatus; means for tracking, for uplink transmissions at the apparatus, at least one downlink reference signal within each of the at least one group of downlink reference signals.

## Description

### FIELD

The present application relates to a method, apparatus, system and computer program.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus comprising: means for receiving, from a base station, an indication of at least one group of downlink reference signals for tracking, by the apparatus, downlink reception time to use for uplink transmissions at the apparatus; means for tracking, for uplink transmissions at the apparatus, at least one downlink reference signal within each of the at least one group of downlink reference signals.

According to some examples, the reference signals within each group are interchangeable for tracking, by the apparatus, downlink reception time to use for uplink transmissions at the apparatus.

According to some examples, the base station groups at least two downlink reference signals into the at least one group of downlink reference signals, wherein the apparatus comprises: means for sending, to the base station, an indication that the apparatus can track a first number of groups; wherein the base station groups the at least two downlink reference signals into a second number of groups, the second number of groups being not greater than the first number of groups.

According to some examples, the apparatus comprises: means for sending a grouping indication to the base station, the grouping indication indicating how to group a number of downlink reference signals into the at least one group of downlink reference signals; wherein the base station groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the downlink reference signals within a group have a QCL type relative to each other when the downlink reference signals have similar propagation delay.

According to some examples, the apparatus comprises: means for receiving, from the base station and after receiving the indication of at least one group of downlink reference signals, a second indication of one or more groups of downlink reference signals, wherein the second indication indicates a different grouping of the downlink reference signals, wherein the different grouping is triggered by at least one of: an indication sent from the apparatus to the base station; an expiry of a pre-defined time period; performance degradation observed at the base station.

According to a second aspect, there is provided a method comprising: receiving, from a base station, an indication of at least one group of downlink reference signals for tracking, by an apparatus, downlink reception time to use for uplink transmissions at the apparatus; tracking, for uplink transmissions at the apparatus, at least one downlink reference signal within each of the at least one group of downlink reference signals.

According to some examples, the reference signals within each group are interchangeable for tracking, by the apparatus, downlink reception time to use for uplink transmissions at the apparatus.

According to some examples, the base station groups at least two downlink reference signals into the at least one group of downlink reference signals, wherein the method comprises: sending, to the base station, an indication that the apparatus can track a first number of groups; wherein the base station groups the at least two downlink reference signals into a second number of groups, the second number of groups being not greater than the first number of groups.

According to some examples, the method comprises: sending a grouping indication to the base station, the grouping indication indicating how to group a number of downlink reference signals into the at least one group of downlink reference signals; wherein the base station groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the downlink reference signals within a group have a QCL type relative to each other when the downlink reference signals have similar propagation delay.

According to some examples, the method comprises: receiving, from the base station and after receiving the indication of at least one group of downlink reference signals, a second indication of one or more groups of downlink reference signals, wherein the second indication indicates a different grouping of the downlink reference signals, wherein the different grouping is triggered by at least one of: an indication sent from the apparatus to the base station; an expiry of a pre-defined time period; performance degradation observed at the base station.

According to a third aspect, there is provided an apparatus comprising at least one processor and at least one memory storing instructions that, when executed by the at least one processor, cause the apparatus at least to perform: receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to some examples, the reference signals within each group are interchangeable for tracking, by the apparatus, downlink reception time to use for uplink transmissions at the apparatus.

According to some examples, the base station groups at least two downlink reference signals into the at least one group of downlink reference signals, wherein the at least one memory and the computer program code are configured to, with the at least one processor, cause the apparatus at least to perform: sending, to the base station, an indication that the apparatus can track a first number of groups; wherein the base station groups the at least two downlink reference signals into a second number of groups, the second number of groups being not greater than the first number of groups.

According to some examples, the at least one memory and the computer program code are configured to, with the at least one processor, cause the apparatus at least to perform: sending a grouping indication to the base station, the grouping indication indicating how to group a number of downlink reference signals into the at least one group of downlink reference signals; wherein the base station groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the downlink reference signals within a group have a QCL type relative to each other when the downlink reference signals have similar propagation delay.

According to some examples, the at least one memory and the computer program code are configured to, with the at least one processor, cause the apparatus at least to perform: receiving, from the base station and after receiving the indication of at least one group of downlink reference signals, a second indication of one or more groups of downlink reference signals, wherein the second indication indicates a different grouping of the downlink reference signals, wherein the different grouping is triggered by at least one of: an indication sent from the apparatus to the base station; an expiry of a pre-defined time period; performance degradation observed at the base station.

According to a fourth aspect there is provided an apparatus comprising: circuitry for: receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to a fifth aspect there is provided a computer program comprising instructions for causing an apparatus to perform at least the following: receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to a sixth aspect there is provided a computer program comprising instructions stored thereon for performing at least the following: receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to a seventh aspect there is provided a non-transitory computer readable medium comprising program instructions for causing an apparatus to perform at least the following receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to an eighth aspect there is provided a non-transitory computer readable medium comprising program instructions stored thereon for performing at least the following: receiving, from a base station, an indication of at least one group of downlink reference signals for tracking, by the apparatus, downlink reception time to use for uplink transmissions at the apparatus; tracking, for uplink transmissions at the apparatus, at least one downlink reference signal within each of the at least one group of downlink reference signals.

According to a ninth aspect there is provided an apparatus comprising: means for sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to some examples, the reference signals within each group are interchangeable for tracking, by the user equipment, downlink reception time to use for uplink transmissions at the user equipment.

According to some examples, the apparatus comprises: means for performing grouping of at least two downlink reference signals into the at least one group of downlink reference signals.

According to some examples, the apparatus comprises: means for receiving, from the user equipment, an indication that the user equipment can track a first number of groups; wherein the means for performing grouping groups the at least two downlink reference signals into a second number of groups, the second number of groups being not greater than the first number of groups.

According to some examples, the apparatus comprises: means for performing a determination to group the downlink reference signals in the at least one group based on the downlink reference signals having a similar angular direction at the apparatus; wherein the means for performing grouping groups the at least two downlink reference signals based on the determination.

According to some examples, the apparatus comprises: means for receiving a grouping indication from the user equipment, the grouping indication indicating how to group a number of downlink reference signals into the at least one group of downlink reference signals; wherein the means for performing grouping groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the apparatus comprises: means for determining that downlink reference signals within a group have a QCL type relative to each other when the downlink reference signals have similar propagation delay.

According to some examples, the apparatus comprises: means for sending, to the user equipment and after sending the indication of at least one group of downlink reference signals, a second indication of one or more groups of downlink reference signals, wherein the second indication indicates a different grouping of the downlink reference signals, wherein the different grouping is triggered by at least one of: an indication received at the apparatus from the user equipment; an expiry of a pre-defined time period; performance degradation observed at the apparatus.

According to a tenth aspect, there is a provided a method comprising: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to some examples, the reference signals within each group are interchangeable for tracking, by the user equipment, downlink reception time to use for uplink transmissions at the user equipment.

According to some examples, the method comprises: performing grouping of at least two downlink reference signals into the at least one group of downlink reference signals.

According to some examples, the method comprises: receiving, from the user equipment, an indication that the user equipment can track a first number of groups; grouping the at least two downlink reference signals into a second number of groups, the second number of groups being not greater than the first number of groups.

According to some examples, the method comprises: performing a determination to group the downlink reference signals in the at least one group based on the downlink reference signals having a similar angular direction at the apparatus; grouping the at least two downlink reference signals based on the determination.

According to some examples, the method comprises: receiving a grouping indication from the user equipment, the grouping indication indicating how to group a number of downlink reference signals into the at least one group of downlink reference signals; wherein the means for performing grouping groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the method comprises: determining that downlink reference signals within a group have a QCL type relative to each other when the downlink reference signals have similar propagation delay.

According to some examples, the method comprises: sending, to the user equipment and after sending the indication of at least one group of downlink reference signals, a second indication of one or more groups of downlink reference signals, wherein the second indication indicates a different grouping of the downlink reference signals, wherein the different grouping is triggered by at least one of: an indication received at the apparatus from the user equipment; an expiry of a pre-defined time period; performance degradation observed at the apparatus.

According to an eleventh aspect there is provided an apparatus comprising: at least one processor; and at least one memory including computer program code; the at least one memory and the computer program code configured to, with the at least one processor, cause the apparatus at least to perform: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to some examples, the reference signals within each group are interchangeable for tracking, by the user equipment, downlink reception time to use for uplink transmissions at the user equipment.

According to some examples, the at least one memory and the computer program code are configured to, with the at least one processor, cause the apparatus at least to perform: performing grouping of at least two downlink reference signals into the at least one group of downlink reference signals.

According to some examples, the at least one memory and the computer program code are configured to, with the at least one processor, cause the apparatus at least to perform: receiving, from the user equipment, an indication that the user equipment can track a first number of groups; grouping the at least two downlink reference signals into a second number of groups, the second number of groups being not greater than the first number of groups.

According to some examples, the at least one memory and the computer program code are configured to, with the at least one processor, cause the apparatus at least to perform: performing a determination to group the downlink reference signals in the at least one group based on the downlink reference signals having a similar angular direction at the apparatus; grouping the at least two downlink reference signals based on the determination.

According to some examples, the at least one memory and the computer program code are configured to, with the at least one processor, cause the apparatus at least to perform: receiving a grouping indication from the user equipment, the grouping indication indicating how to group a number of downlink reference signals into the at least one group of downlink reference signals; wherein the means for performing grouping groups the at least two downlink reference signals based on the grouping indication.

According to some examples, the indication of at least one group of downlink reference signals comprises an association of downlink reference signals to a coresetPoollndex.

According to some examples, the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

According to some examples, the indication of at least one group of downlink reference signals comprises an indication that downlink reference signals within a group have a QCL type relative to each other, wherein the method comprises: determining that downlink reference signals within a group have a QCL type relative to each other when the downlink reference signals have similar propagation delay.

According to some examples, the at least one memory and the computer program code are configured to, with the at least one processor, cause the apparatus at least to perform: sending, to the user equipment and after sending the indication of at least one group of downlink reference signals, a second indication of one or more groups of downlink reference signals, wherein the second indication indicates a different grouping of the downlink reference signals, wherein the different grouping is triggered by at least one of: an indication received at the apparatus from the user equipment; an expiry of a pre-defined time period; performance degradation observed at the apparatus.

According to a twelfth aspect there is provided an apparatus comprising circuitry for: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to a thirteenth aspect there is provided a computer program comprising instructions for causing an apparatus to perform at least the following: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to a fourteenth aspect there is provided a computer program comprising instructions stored thereon for performing at least the following: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to a fifteenth aspect there is provided a non-transitory computer readable medium comprising program instructions for causing an apparatus to perform at least the following: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to a sixteenth aspect there is provided a non-transitory computer readable medium comprising program instructions stored thereon for performing at least the following: sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows an offset between a Downlink frame and an Uplink frame;
Figure 2 shows a difference between 3GPP releases;
Figure 3 shows a path between a single TRP and a device;
Figure 4 shows a path between a single TRP and a device;
Figure 5 shows a path between a single TRP and a device;
Figure 6 shows a path between two TRPs and a device;
Figure 7a shows a path between a single TRP and a device;
Figure 7b shows a path between a single TRP and a device;
Figure 8 shows a path between a single TRP and a device;
Figure 9 shows a path between a single TRP and a device;
Figure 10 shows a path between two TRPs and a device;
Figure 11 shows a path between two TRPs and a device;
Figure 12 shows a message flow;
Figure 13 shows a method flow diagram;
Figure 14 shows a method flow diagram;
Figure 15 shows an example apparatus;
Figure 16 shows an example apparatus; and
Figure 17 shows a schematic representation of a non-volatile memory medium storing instructions which when executed by a processor allow a processor to perform one or more of the steps of the methods disclosed herein.

### DETAILED DESCRIPTION

In the following certain embodiments are explained with reference to mobile communication devices capable of communication via a wireless cellular system and mobile communication systems serving such mobile communication devices.

Some examples relate to 3GPP New Radio (NR) physical layer development. Some examples are related to facilitating User Equipment (UE) operation in multi-Transmit Receive Point (TRP) scenarios with one or more Timing Advance (TA) loops.

To improve Uplink (UL) performance in multi-TRP deployments in general, including both intra- and intercell multi-TRP deployments, the handling of TA should be improved so that different TAs can be used for the UL transmissions towards different TRPs. Also, beam management operation may benefit from improved handling of TA, if the switching of beams leads to a change in propagation delay.

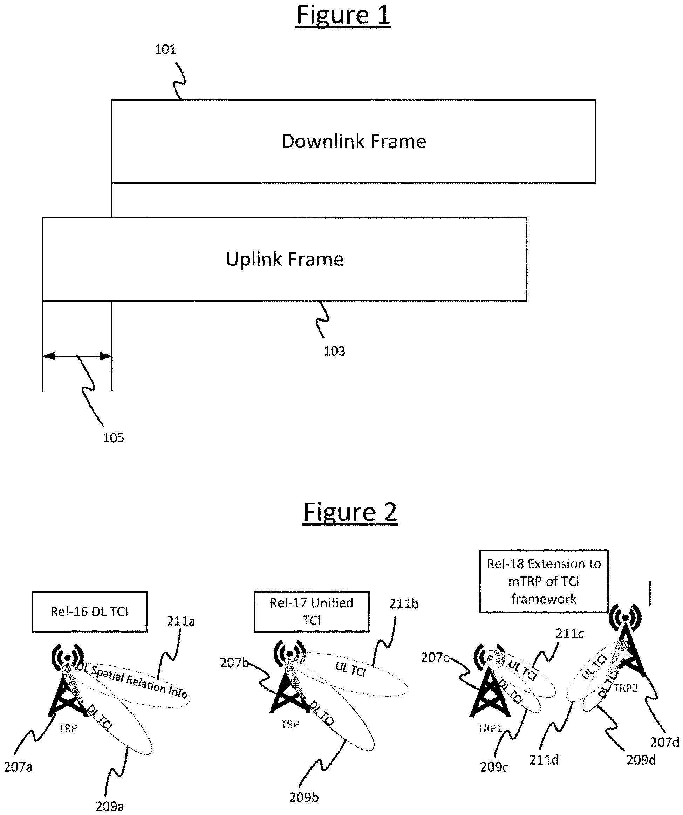

The concept and functionality of NR Timing Advance is similar to LTE Timing Advance. TA is a special command (notification) from a base station (e.g., gNB) to UE that enables the UE to adjust its uplink transmission as shown in Figure 1. This kind of UL adjustment can apply to, for example: physical uplink shared channel (PUSCH), physical uplink control channel (PUCCH) and sounding reference signal (SRS). TA can be used to ensure that uplink transmissions from UEs are synchronized when received by the base station.

As shown in Figure 1, an uplink frame i 103 shall start a time period 105 before the start of the corresponding downlink frame 101 at the UE. Time period 105 may be equivalent to (*N_{TA}*+*N*_{*TA*,*offset*})*T_{c}*. According to some examples, *T_{c}*=0.509ns. 3GPP TS38.133 v15.6 Table 7.1.2-2 discusses *N*_{*TA*,*offset*} values. *N_{TA}* is discussed in 3GPP TS38.312-4.2, and is based on a TA value.

TA values can be delivered to a UE through a Random Access Response (RAR) or a Medium Access Control Element (MAC CE).

When TA is delivered to UE through RAR, the UE can determine the TA value from two different Mac layer commands, depending on the situation. For the first UL message after Physical Random Access Channel (PRACH), UE can apply the TA value that it extracts from RAR (RACH response). After the initial RACH process, UE can apply the TA value that it extracts from TA MAC CE, if it received it.

The UE can adjust UL transmission based on RAR during the RACH procedure. Once the initial attach is complete, UE can adjust UL transmission base don MAC CE-TA. A MAC CE TA may comprise a Timing Advance Group (TAG ID) and a TA command. According to some examples, the TA Command Field is 6 bits which mean 64 steps in total ranging from -32 to 32 *T_{c}* in real timing. Since *T_{c}* is 0.509 ns, the range of the physical timing is -16.3 us to 16.3 us with 15 kHz subcarrier spacing.

A timing advance group (TAG) consists of one or more serving cells with the same uplink TA and same downlink timing reference cell. Each TAG contains at least one serving cell with configured uplink, and the mapping of each serving cell to a TAG is configured by RRC. The TAG field in the MAC CE refers to the tag-id specified in RRC message as shown below.

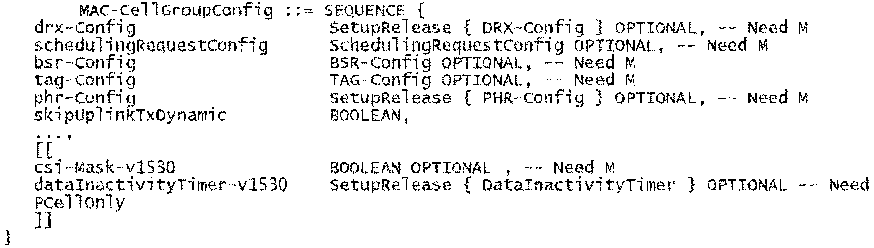

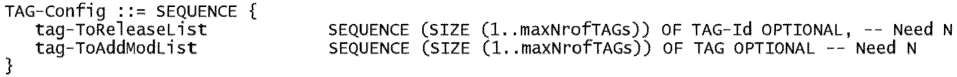

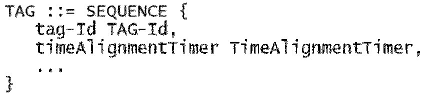

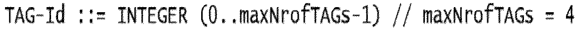

A Transmission Configuration Indicator (TCI)-state defines a Quasi Co-Location (QCL) source and QCL type for a target reference signal and hence indicates a transmission configuration which includes QCL-relationships between the Downlink Reference Signals (DL RSs) in one RS set. DL and UL signals characterized by the TCI are received only by a subset of panels used by the UE and these panels receiving RSs characterized by TCI are active panels used in the actual DL and UL transmission. The RAN1 specification describes the RS grouping concept. DL signals received by the UE are said to be part of the same group if they are received by the same spatial filter (received beam) at the UE. This is signalled to the gNB and it is specified in 3GPP TS38.214.

Figure 2 illustrates the evolutions of the TCI framework through the releases. In Rel-16, a single TRP 207a uses a DL TCI 209a and UL Spatial Relation Info 211a. Rel-17 defined unified TCI framework, i.e., using TCI states 209b and 211b to provide source reference signals for different channels for both downlink (DL) and uplink (UL), respectively. This improvement in Rel-17 targeted single TRP 207b operation, and UL using multi TRP was only supported with TDM patterns without unified TCI framework, i.e., based on Rel-15 beam indication framework. As such, Rel-17 only supports 1 indicated TCI state at a time with either joint or separate TCI configuration. As part of the MIMO evolution objectives in Rel-18 it is targeted to specify up to 2 indicated joint TCI states or up to 2 DL TCI states 209c and 209d and up to 2 UL TCI states 211c and 211d for UL multi-TRP 207c, 207d operation, including e.g., simultaneous two-panel UL transmission in s-DCI mTRP scenario or m-DCI mTRP scenario where the UE is having uplink towards both TRPs.

The configuration of the pool of TCI states is done in RRC and it can be done either for "joint" or for "separate" TCI operation. In joint operation the pool is up to 128 TCI states which are used for joint UL and DL, i.e., a same TCI is used for both UL and DL. In separate configuration, there are two pools, one for DL and one for UL. They each contain up to 64 (for PDCCH) or 128 (for PDSCH) for DL and 32 or 64 TCI states for UL. Then, MAC can activate a pool of up to 8 TCI codepoints, each of them either pointing to a DL, an UL or a joint DL/UL pair of TCI states. In separate TCI configuration, the maximum number of activated codepoints is 8, therefore the maximum number of activated TCI states can be 8 DL + 8 UL, in the case that each codepoint points to a pair of DL/UL TCI states. Finally, the indication is done via DCI whenever the pool of activated TCI states contains more than 1 TCI state.

The quasi co-location of two antenna ports means that the channel conditions for the symbols transmitted from those antenna ports are similar and can be inferred from one to another. Depending on the set of properties for the channel conditions 3GPP TS 38.214 defines the following QCL-types: QCL-TypeA, QCL-TypeB, QCL-TypeC, QCL-TypeD.

**Table 1: QCL types and description**

| **QCL Type** | **Description** |
|---|---|
| Type-A | Similar [Doppler shift, Doppler spread, average delay, delay spread] |
| Type-B | Similar [Doppler shift, Doppler spread] |
| Type-C | Similar [Doppler shift, average delay] |
| Type-D | Simialr [Spatial Rx parameter] |

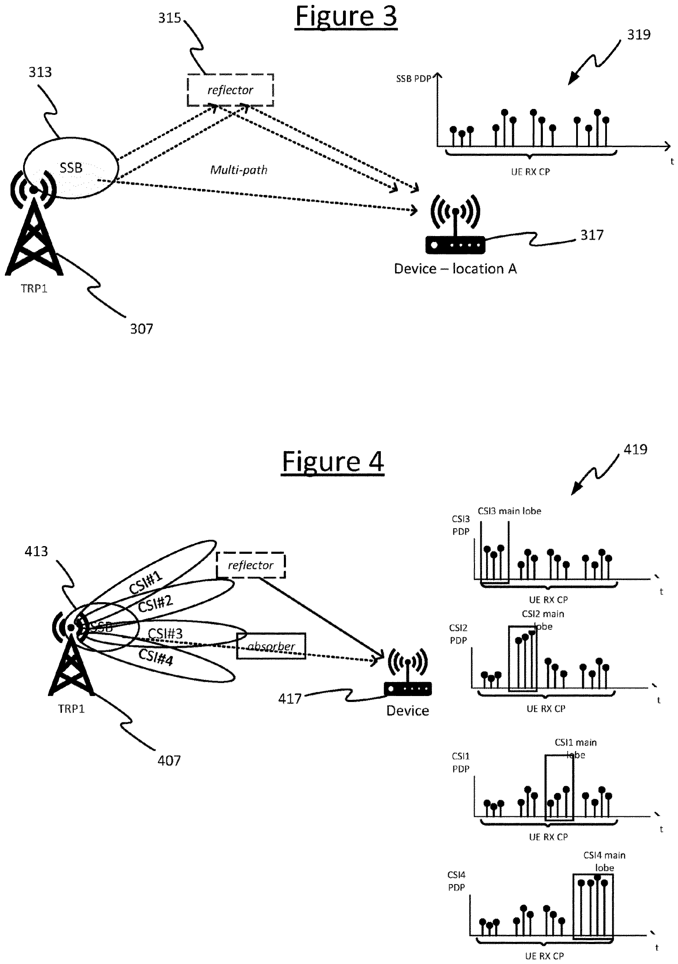

UE beam measurements can be made by measuring Power Delay Profiles of DL RS Synchronization Signal Block (SSB), as shown in Figure 3. UE 317 at location A measures the PDP 319 of DL RS SSB 313 from TRP1 307. In this examples, there is a multi-path environment including a reflector 315.

In other examples such as the example of Figure 4, UE 417 can measure the PDP of each CSI DL RS. In the example of Figure 4, this is CSI#1, CSI#2, CSI#3 and CSI#4 of SSB 413 sent by the network at TRP1 407. When comparing the PDPs of Figures 3 and 4, the PDP detected by the UE when receiving CSI-RS narrower beams will still contain all channel taps of SSB though the taps on the main lobe are received with higher antenna gain and the other ones from the side lobes with smaller antenna gain.

Among the CSI DL RS, there might be a significant difference in the acquired timing reference from DL (as it may change depending on the detected paths of each CSI DL RS) on which UE aligns its frame boundary.

In a joint TCI configuration, the gNB uses the same beam for both UL and DL and there is a single DL RS for this TCI state. In separate TCI configuration, the gNB uses different beams for DL and for UL and each of those beams carry their dedicated DL RS which the UE measures.

According to some examples, a dedicated RS for TA tracking is provided. A UE could be tracking a DL pathloss RS for joint or separate TCI configuration for UL power control purposes. It is useful for a UE to know which RS to use to estimate path delay, and then determine UL timing.

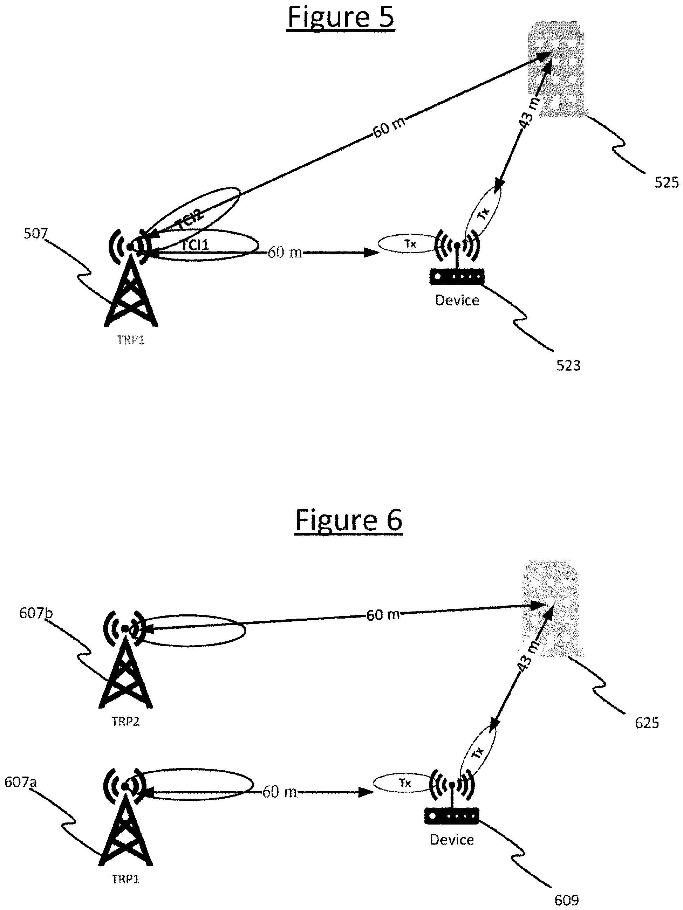

One option is that a UE can monitor at least one RS associated to the activated UL/joint TCI states. However, there can be an issue with this option when there are different propagation delays per TCI - see for example Figures 5 and 6:
- Very different propagation delays in Figure 5 can be measured at the UE 523 with single TRP1 507 when comparing TCI1 (related to a line of sight (LOS) link) and TCI2 (related to a non-LOS link with reflector 525); or
- Very different propagation delays in Figure 6 can be measured at the UE 609 when comparing two TRPs, TRP1 607a (that has a LOS link toward the UE) and TRP2 607b (that has a non-LOS link toward the UE with reflector 625).

Another option is for a UE to monitor the RS of the indicated UL/joint TCI state (per TRP). In this option, the UE only measures an indicated RS however. In the option described just above, a UE can select a RS to measure among activated RS(s).

A further option is for the UE to monitor all RSs associated to activated UL/joint TCI states. This however causes higher complexity and the UE side, as the UE needs to track all activated UL/joint TCls.

In all of the options described in the above three paragraphs, an issue is that the UE may only be able to track up to K DL RS for reference timing although the network may configure up to N active TCI states, where K < N. In some anticipated scenarios, the network to have up to N=8 active TCI states while the UE hardware/software may only be able to track up to K=2 RS for reference timing e.g., if the UE only have 2 receivers.

According to some examples, a base station (e.g., gNB) indicates to a UE which beams (downlink RSs) are part of a group. Beams in the same group can be used interchangeably for TA reference timing tracking.

A UE may first indicate to the base station that the UE is able to track up to K RSs, where K is a positive integer or zero. The UE may make this indication as part of a UE capability indication.

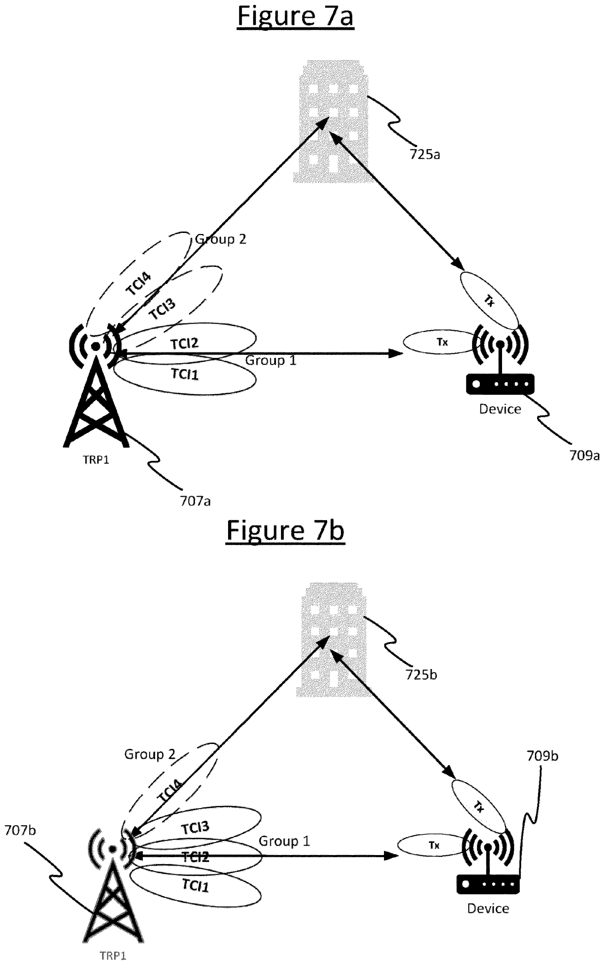

The Network (NW) may then organize N activated joint/UL TCI states into up to K groups. In a first option, the NW can decide how to perform the grouping. According to some examples, the NW may use a criterion of grouping together beams with similar/close angular direction (AoD). See for example Figures 7a and 7b. In both Figures 7a and 7b, N=4 and K=2. In Figure 7a, beams from TRP1 707a are split into two groups with the same number of TCls per group. The beams are direct to UE 709a, with some beams characterized by non-LOS with reflector 725a. In Figure 7b, beams from TRP1 707b are split into two groups with different number of TCls per group. The beams are direct to UE 709b, with some beams characterized by non-LOS with reflector 725b.

In a second option, a UE can indicate to the NW how to group the N beams into K groups. UE may send an indication (i.e., grouping) to a NW that certain RSs (e.g., CSI-RS, SSB, etc.) can be interchangeably used for reference timing.

After organization of N activated joint UL/TCI states into groups, the NW may indicate to the UE to monitor at least one RS associated to activated UL/joint TCI states of the same group. This indication may be done using the following three options (although it will be understood that other options may also be used to make this indication):
- Option 1: The group may be indicated by the association of Pathloss RS(s) to a coresetPoollndex. The association may be indirect via TCI states or via other means.
- Option 2: QCL-TypeA source RS of the TCI state of the certain Control Resource Set (CORESET) can be associated to the certain coresetPoollndex.
- Option 3: A QCL Type may indicate the RSs that can be interchangeably used for reference timing. The QCL Type may be a new QCL Type "QCLTypeE".

QCLTypeE may be associated to a QCL-TypeA RS. In one example, the RS is the same that provides both QCL-TypeA and QCL-TypeE parameters for the UE. In another example, the gNB may indicate that UE can determine QCL-TypeE parameter from a particular QCL-TypeA RS. QCL-TypeE RS may be associated only to UL TCI state or joint DL/UL TCI state.

For example, a first signal can be considered to be QCL-TypeE with a second signal if they have gone through similar channel conditions in terms of propagation delay, which could be expressed as
- same time of reception of the first-path delay, i.e., the propagation delay of the first path of the channel impulse response or PDP, or
- same time of reception of the strongest-path delay, i.e., the propagation delay of the strongest path of the channel impulse response or PDP.

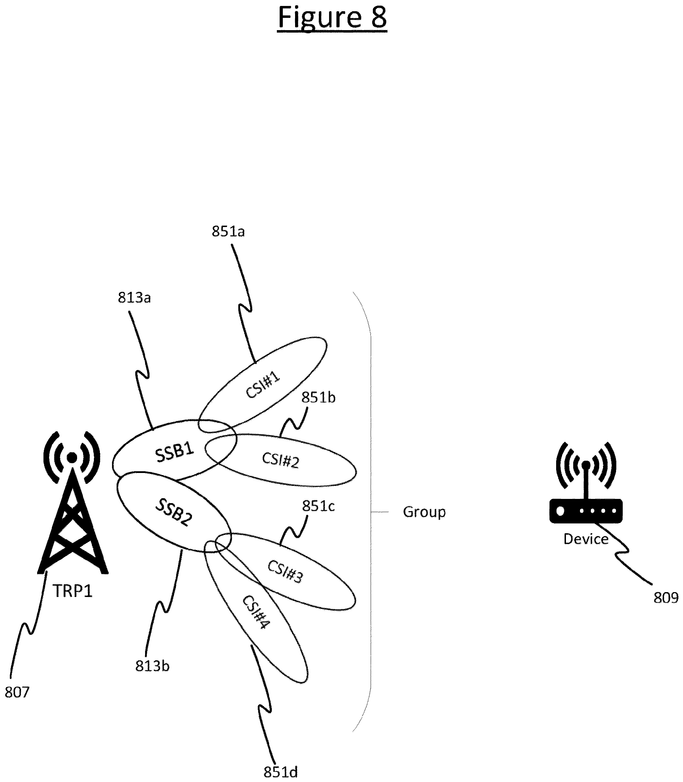

As specified in 3GPP TS 38.331, a TCI-State IE can be used to associate DL reference signals with a corresponding QCL type. In the example of Figure 8, TRP1 807 may have an SSB1 813a and SSB2 813b. The gNB could signal the following to UE 809:

```
 TCI-State ::= SEQUENCE {
 tci-Stateld TCI-1,
 qcl-Type1 = {referenceSignal=csi-rs#1 , qcl-Type=typeD},
 qcl-Type2 = {referenceSignal=ssb-rs#1 , qcl-Type=typeA},
 [[ ...
 ]]
 }
 TCI-State ::= SEQUENCE {
 tci-Stateld TCI-2,
 qcl-Type1 = {referenceSignal=csi-rs#3, qcl-Type=typeD},
 qcl-Type2 = {referenceSignal=ssb-rs#1 , qcl-Type=typeA},
 [[ ...
 ]]
 }
```

This would signal that the UE 809 can use SSB1 813a as a timing reference for TCI#1 and also as a timing reference for TCI#2 (which are following CSI#1 851a and CSI#3 851c, respectively). However, UE 809 would not be aware from this signalling that it could use SSB2 813b as a timing reference for both TCI#1 and TCI#2, i.e., UE 809 would not know that it could use either SSB1 813a or SSB2 813b for timing reference. As a solution, the gNB could perform RRC Reconfiguration for SSB2 813b, however this is sub-optimal because the RRC Config is already done for all TCI states (up to 128) upon which only up to 8 TCI state are activated afterwards. Performing a reconfiguration again after activation causes increased overhead and interruption.

By using option 2 (discussed above) for indicating from the NW to a UE to monitor at least one RS associated to activated UL/joint TCI states of the same group, RRC reconfiguration and increased overhead/interruption can be avoided. QCL-TypeA source RS of the TCI state of the certain CORESET can associated to the certain coresetPoollndex:

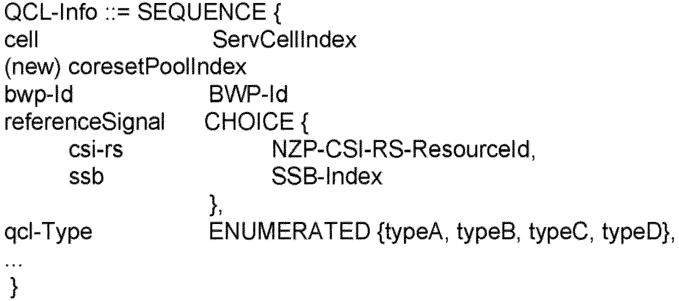

According to other examples QCL-Type A source RS of the TCI state of a certain CORESET can be associated to a certain coresetPoollndex by:
- UE determining implicitly the QCL-TypeA RS of the activated/indicated TCI state of the CORESET with the lowest ID per coresetPoollndex to be the timing RS; or
- UE determining implicitly the QCL-TypeA RS of the latest activated/indicated TCI state of the CORESET per coresetPoollndex to be the timing RS.

As discussed above, QCL Type may indicate the RSs that can be interchangeably used for reference timing. The QCL Type may be a new QCL Type "QCLTypeE" for RSs that have a common propagation delay. The NW may indicate to the UE that two TCls can be grouped, i.e., just one RS needs to be monitored by the UE for this group of TCls, by indicating that these two RSs are QCL-TypeE.

While in QCL-TypeA all 4 parameters (Doppler shift, Doppler spread, average delay, delay spread) need to be common to the two RSs, the advantage of a new QCL-TypeE is that it would just focus on common propagation delay. Therefore, the new QCL-TypeE may group TCI states which would not be QCL-TypeA although they would share the same timing for the first-path delay. It is therefore a broader grouping.

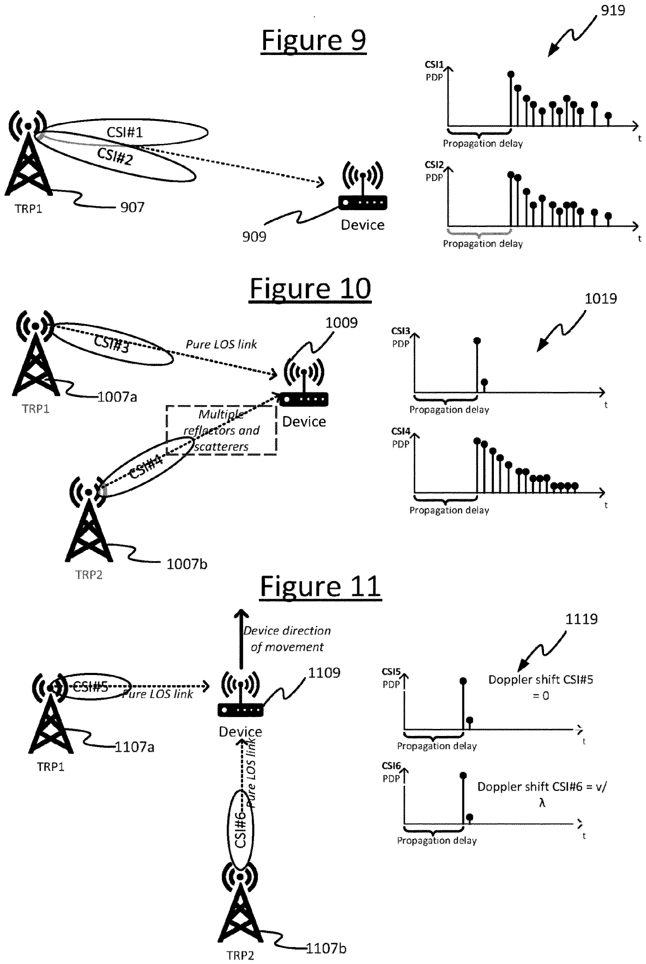

There are scenarios where two RSs are both QCL-TypeA and QCL-TypeE: see for instance Figure 9 where the two CSI-RSs sent by TRP1 907 to UE 909 experience similar propagation delay and PDP (as shown in 919), thus have common Doppler shift, Doppler spread, average delay, and delay spread.

There are also scenarios (in particular with multi-TRP) where two RSs are QCL-TypeE but not QCL-TypeA: see for instance Figure 10 where the two CSI-RSs sent by TRP1 1007a and TRP2 1007b to UE 1009 experience similar propagation delay but different PDP/delay spread, as shown in 1019.

A similar issue happens with QCL-TypeC, where 2 parameters (Doppler shift, average delay) need to be common to the two RSs: again, in particular with multi-TRP, there may be a scenario as shown in Figure 11 where the two CSI-RSs sent by TRP1 1107a and TRP2 1107b to UE 1109 experience similar propagation delay as shown in 1119 (and are therefore QCL-TypeE), even similar delay spread (in such example the two links are both LOS), but different Doppler shifts (note that Doppler Shift, depends on the device speed, carrier frequency, but also on the direction of movement and angular direction of the incoming wave/signal at the device).

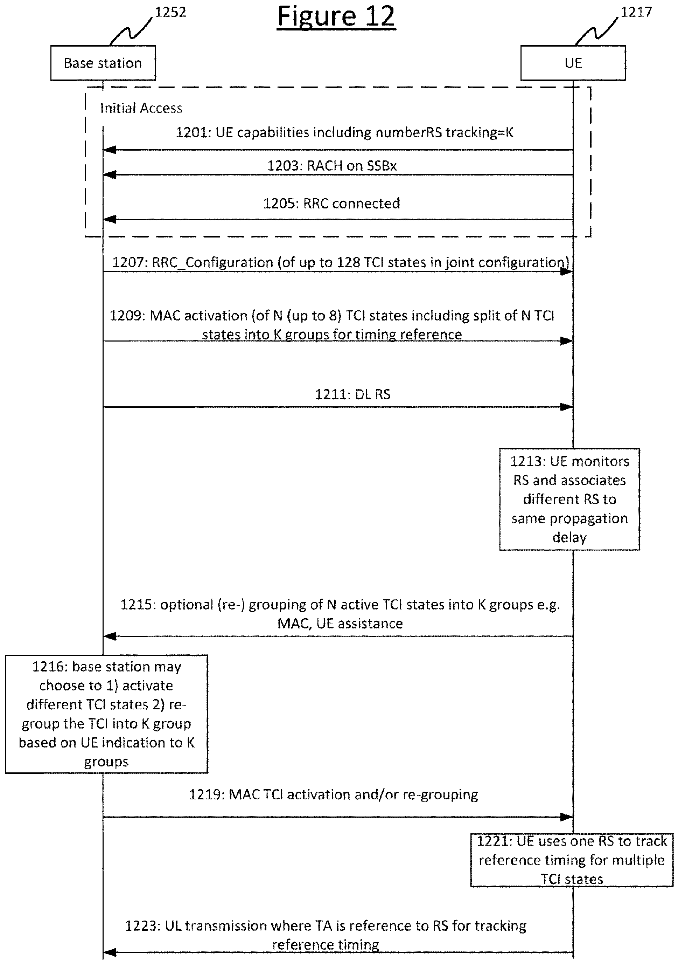

Figure 12 shows a message flow between a base station 1252 (e.g., gNB) and UE 1217.

An initial access procedure takes place at 1201, 1203 and 1205. At 1201, UE 1217 sends a capability indication to base station 1252. The indication may comprise an indication that UE 1217 can track K RSs (K beams). At 1203, UE 1217 performs a RACH procedure on an SSB ("SSBx") of base station 1252, and at 1205 UE 1217 is in an RRC connected state to base station 1252.

At 1207, base station 1252 sends an RRC configuration to UE 1217. The RRC configuration may comprise TCI states that are in a joint configuration. According to some examples, up to 128 TCI states may be indicated at 1207.

At 1209, base station 1252 sends an indication of at least one group of downlink reference signals for tracking, by the user equipment, downlink reception time to use for uplink transmissions at the user equipment. The indication may also comprise an indication comprising an activation of N TCI states for UE 1217 to use for timing reference. UE 1217 may use these to determine downlink reception time, which can then be used for uplink transmissions at UE 1217. The activation at 1209 may comprise a MAC activation. The activation at 1209 may comprise a split of the N TCI states into K groups to be used for timing reference. Base station 1252 may perform the grouping of N signals into K groups, where N>K. The grouping may be based on grouping DL RSs having a simialr angular direction together within each group.

The indication sent at 1209 may comprise:
- a group indicated by the association of DL RS(s) to a coresetPoollndex;
- QCL-TypeA source RS of the TCI state of the certain CORESET is associated to the certain coresetPoollndex; or
- QCL-TypeE indication that the RSs can be interchangeably used for reference timing, for DL RSs that have similar propagation delay.

At 1211, one or more DL RS(s) (beam(s)) are sent from base station 1252 to UE 1217.

At 1213, UE 1217 monitors the one or more DL RS(s) and associates different RSs to the same propagation delay, using the grouping received at 1209. UE 1217 can track, for uplink transmissions at the user equipment, at least one downlink reference signal within each of the at least one group of downlink reference signals. RSs within each group can be interchangeable for tracking, by UE 1217, downlink reception time to use for uplink transmissions at UE 1217.

At 1215, UE 1217 optionally sends a grouping (or re-grouping) of the N active TCI states into K groups. This grouping may be different to the grouping received at 1209. This may be sent via MAC, or UE assistance. The grouping may comprise an indication of how to group a number of DL RSs into the K groups of DL RSs. UE 1217 may send a request for re-grouping at 1215 when there has been variation in propagation delays measured at UE 1217, for example.

At 1216, base station 1252 may determine to change the grouping signalled to UE 1217 at 1209. This may comprise at least one of: the base station activating different TCI states, and therefore changing the N TCI states; re-grouping the active TCI states into K groups (or any positive integer less than K) differently. This re-grouping can be based on the indication sent at 1215, or optionally can be based on measurements made by base station 1252. The re-grouping may be triggered when some performance degradation is observed by the base station in the uplink transmission, for example caused by additional interference, which eventually is caused by some misalignment in the uplink transmission time, which, in turn, is caused by variation in the propagation delays. In some examples, the re-grouping may be triggered by the expiry of a periodic timer, such that there is a re-grouping after a pre-defined time period.

The option of UE 1217 indication to base station 1252 at 1215 enables a more dynamic grouping that also takes into account the channel and channel variations. Indeed, when only the network does the grouping of N TCI states into K group, it is a rather static grouping which may rely on e.g. LOS, TRP deployment and assumes a somewhat static channel. Nevertheless, there may be UE movement, rotation, a reflector, dynamic multi-path which would result in a different grouping (which may vary with time) when RSs are received at the UE 1217. The UE 1217 can provide this view to the base station 1252 at 1215 and the base station 1252 can adjust by activating different TCI of re-grouping the TCI states into K groups and indicate it to UE (at 1216).

At 1219, base station 1252 sends a second indication of one or more groups of downlink reference signals, wherein the second indication indicates a different grouping of the downlink reference signals when compared to the grouping at 1219. The second indication may comprise a new MAC TCI activation and/or re-grouping to UE 1217.

At 1221, UE 1217 determines one RS to use to track reference timing for multiple TCI states, using the grouping signalled at 1219.

At 1223, UE 1217 performs UL transmission, where TA is referenced to the RS determined at 1219 or 1216 for multiple TCI states. It should be noted that in some examples, the method may skip immediately from 1213 to 1223.

By using the above method, UE 1217 does not need to track all activated UL/joint TCls. According to some examples, different propagation delays for different TCls can still be measured.

Some examples enable flexibility of configuring either 2 TA loops with 2 reference timing or 2 TA loops with only 1 reference timing. The relation between 1 or 2 reference timings for TA loops is related to the cell range where UE 1217 can switch TCI states with different propagation delays without requiring RACH procedure to re-acquire timing.

In one system operation example in multi-DCI multi-TRP configuration, UE 1217 has two TA loops/TAGs and each TA loop/TAG is having the associated QCL-TypeE RS to determine the absolute receive timing to facilitate the determination (together with the current per timing advance per TAG) of the uplink transmit timing.

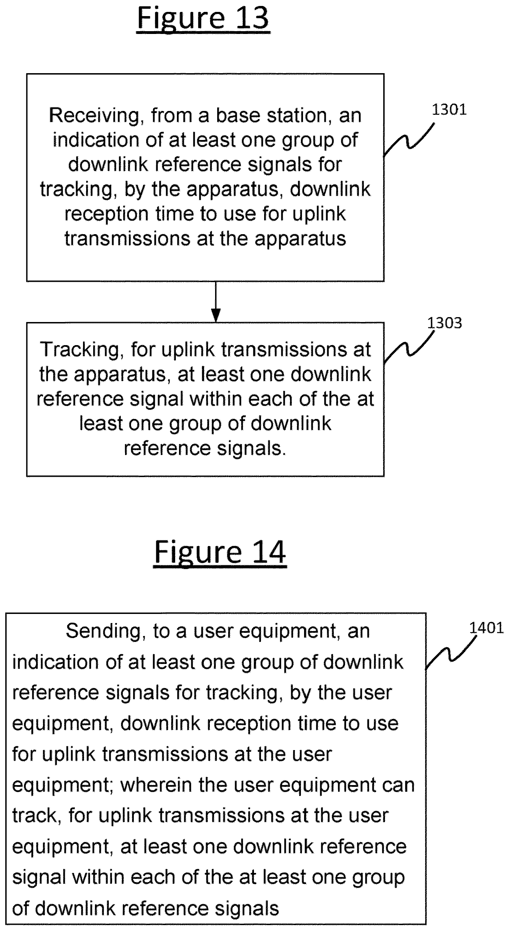

Figure 13 shows an example method flow. The method flow may be performed, for example, by a UE as described herein.

At 1301, the method comprises receiving, from a base station, an indication of at least one group of downlink reference signals for tracking, by the apparatus, downlink reception time to use for uplink transmissions at the apparatus.

At 1303, the method comprises tracking, for uplink transmissions at the apparatus, at least one downlink reference signal within each of the at least one group of downlink reference signals.

Figure 14 shows an example method flow. The method flow may be performed, for example, by a base station as described herein.

At 1401, the method comprises sending, to a user equipment, an indication of at least one group of downlink reference signals for tracking, by the user equipment, downlink reception time to use for uplink transmissions at the user equipment; wherein the user equipment can track, for uplink transmissions at the user equipment, at least one downlink reference signal within each of the at least one group of downlink reference signals.

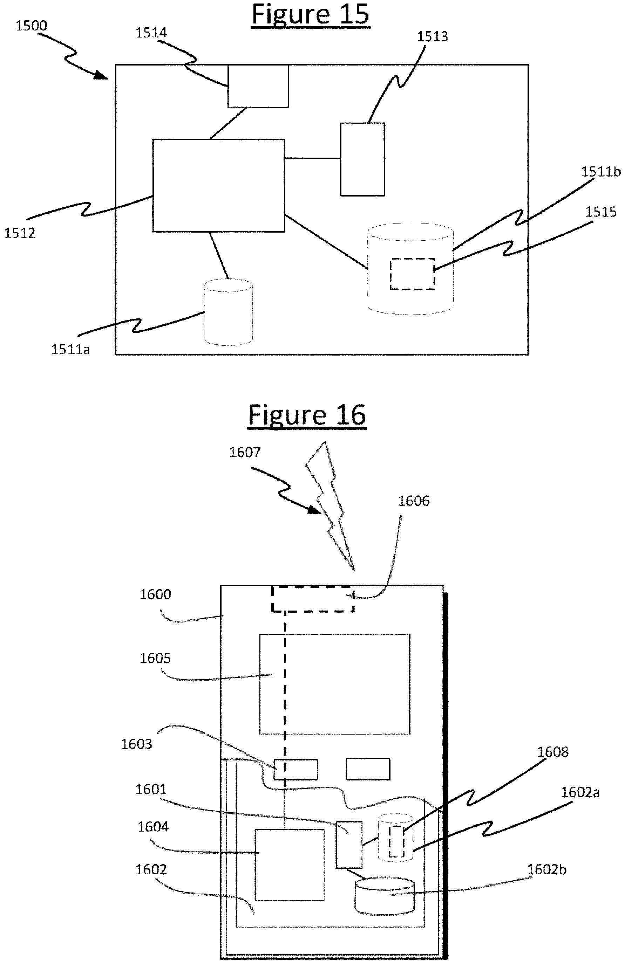

Figure 15 illustrates an example of a control apparatus 1500 for controlling a network. The control apparatus may comprise at least one random access memory (RAM) 1511a, at least on read only memory (ROM) 1511b, at least one processor 1512, 1513 and an input/output interface 1514. The at least one processor 1512, 1513 may be coupled to the RAM 1511a and the ROM 1511b. The at least one processor 1512, 1513 may be configured to execute an appropriate software code 1515. The software code 1515 may for example allow to perform one or more steps to perform one or more of the present aspects. The software code 1515 may be stored in the ROM 1511b. The control apparatus 1500 may be interconnected with another control apparatus 1500 controlling another function of the RAN or the core network.

Figure 16 illustrates an example of a terminal 1600, such as a UE. The terminal 1600 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 1600 may provide, for example, communication of data for carrying communications. The communications may be one or more of voice, electronic mail (email), text message, multimedia, data, machine data and so on.

The terminal 1600 may receive signals over an air or radio interface 1607 via appropriate apparatus for receiving and may transmit signals via appropriate apparatus for transmitting radio signals. In Figure 16 transceiver apparatus is designated schematically by block 1606. The transceiver apparatus 1606 may be provided for example by means of a radio part and associated antenna arrangement. The antenna arrangement may be arranged internally or externally to the mobile device.

The terminal 1600 may be provided with at least one processor 1601, at least one memory ROM 1602a, at least one RAM 1602b and other possible components 1603 and 1604 for use in software and hardware aided execution of tasks it is designed to perform, including control of access to and communications with access systems and other communication devices. The at least one processor 1601 is coupled to the RAM 1602b and the ROM 1602a. The at least one processor 1601 may be configured to execute an appropriate software code 1608. The software code 1608 may for example allow to perform one or more of the present aspects. The software code 1608 may be stored in the ROM 1602a.

The processor, storage and other relevant control apparatus can be provided on an appropriate circuit board and/or in chipsets. This feature is denoted by reference 1602. The device may optionally have a user interface such as key pad 1605, touch sensitive screen or pad, combinations thereof or the like. Optionally one or more of a display, a speaker and a microphone may be provided depending on the type of the device.

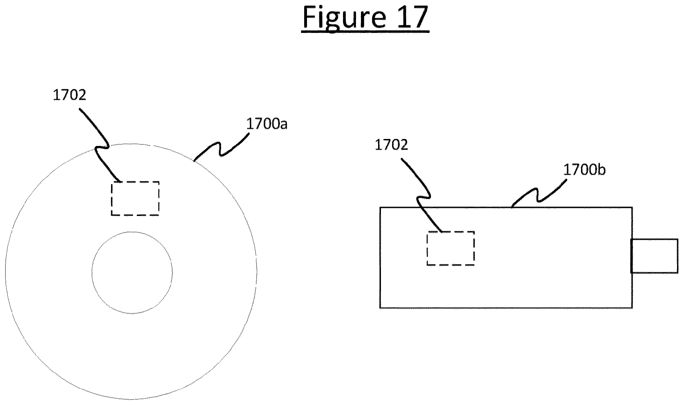

Figure 17 shows a schematic representation of non-volatile memory media 1700a (e.g. computer disc (CD) or digital versatile disc (DVD)) and 1700b (e.g. universal serial bus (USB) memory stick) storing instructions and/or parameters 1702 which when executed by a processor allow the processor to perform one or more of the steps of the above-described methods.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising:
means for receiving, from a base station, an indication of at least one group of downlink reference signals for tracking, by the apparatus, downlink reception time to use for uplink transmissions at the apparatus;
means for tracking, for uplink transmissions at the apparatus, at least one downlink reference signal within each of the at least one group of downlink reference signals.

2. An apparatus according to claim 1, wherein the reference signals within each group are interchangeable for tracking, by the apparatus, downlink reception time to use for uplink transmissions at the apparatus.

3. An apparatus according to claim 1 or claim 2, wherein the base station groups at least two downlink reference signals into the at least one group of downlink reference signals, wherein the apparatus comprises:
means for sending, to the base station, an indication that the apparatus can track a first number of groups;
wherein the base station groups the at least two downlink reference signals into a second number of groups, the second number of groups being not greater than the first number of groups.

4. An apparatus according to claim 3, wherein the apparatus comprises:
means for sending a grouping indication to the base station, the grouping indication indicating how to group a number of downlink reference signals into the at least one group of downlink reference signals;
wherein the base station groups the at least two downlink reference signals based on the grouping indication.

5. An apparatus according to any preceding claim, wherein the indication of at least one group of downlink reference signals comprises an association of downlink reference signals to a coresetPoollndex.

6. An apparatus according to any of claims 1 to 4, wherein the indication of at least one group of downlink reference signals comprises an association of Quasi Co-Location, QCL, TypeA source downlink reference signal of a Transmission Configuration Indicator, TCI, state of a particular CORESET to a particular coresetPoollndex.

7. An apparatus according to any of claims 1 to 4, wherein the indication of at least one group of downlink reference signals comprises an indication that downlink reference signals within a group have a QCL type relative to each other, wherein the downlink reference signals within a group have a QCL type relative to each other when the downlink reference signals have similar propagation delay.

8. An apparatus according to any preceding claim, wherein the apparatus comprises:
means for receiving, from the base station and after receiving the indication of at least one group of downlink reference signals, a second indication of one or more groups of downlink reference signals, wherein the second indication indicates a different grouping of the downlink reference signals, wherein the different grouping is triggered by at least one of: an indication sent from the apparatus to the base station; an expiry of a pre-defined time period; performance degradation observed at the base station.

9. A method comprising:
receiving, from a base station, an indication of at least one group of downlink reference signals for tracking, by an apparatus, downlink reception time to use for uplink transmissions at a user equipment;
tracking, for uplink transmissions at the user equipment, at least one downlink reference signal within each of the at least one group of downlink reference signals.

10. A computer program comprising instructions stored thereon for performing at least the following:
receiving, from a base station, an indication of at least one group of downlink reference signals for tracking, by an apparatus, downlink reception time to use for uplink transmissions at a user equipment;
tracking, for uplink transmissions at the user equipment, at least one downlink reference signal within each of the at least one group of downlink reference signals.

11. An apparatus comprising:
means for sending, to a user equipment, an indication of at least one group of downlink reference signals for tracking, by the user equipment, downlink reception time to use for uplink transmissions at the user equipment;
wherein the user equipment can track, for uplink transmissions at the user equipment, at least one downlink reference signal within each of the at least one group of downlink reference signals.

12. An apparatus according to claim 11, wherein the reference signals within each group are interchangeable for tracking, by the user equipment, downlink reception time to use for uplink transmissions at the user equipment.

13. An apparatus according to claim 11 or claim 12, wherein the apparatus comprises:
means for performing grouping of at least two downlink reference signals into the at least one group of downlink reference signals.

14. An apparatus according to claim 13, wherein the apparatus comprises:
means for receiving, from the user equipment, an indication that the user equipment can track a first number of groups;
wherein the means for performing grouping groups the at least two downlink reference signals into a second number of groups, the second number of groups being not greater than the first number of groups.

15. An apparatus according to claim 13 or claim 14, wherein the apparatus comprises:
means for performing a determination to group the downlink reference signals in the at least one group based on the downlink reference signals having a similar angular direction at the apparatus;
wherein the means for performing grouping groups the at least two downlink reference signals based on the determination.
